Europäisches Patentamt

European Patent Office

Office européen des brevets

(11) Publication number: 0 367 631
A1

## EUROPEAN PATENT APPLICATION

(21) Application number: 89311452.0

(22) Date of filing: 06.11.89

(51) Int. Cl.5: F02M 31/12 , F23K 5/20 , F02M 37/22

(30) Priority: 04.11.88 GB 8825923

(43) Date of publication of application:
09.05.90 Bulletin 90/19

(84) Designated Contracting States:
BE DE ES FR GB IT SE

(71) Applicant: ELMWOOD SENSORS LIMITED
Elm Road
North Shields Tyne & Wear, NE29 8SA(GB)

(72) Inventor: Murray, Allan
23 Yarmouth Drive
Westwood Grange Cramlington(GB)

(74) Representative: Garratt, Peter Douglas et al
Mathys & Squire 10 Fleet Street
London EC4Y 1AY(GB)

(54) Fuel heaters.

(57) A fuel heater for mounting within a diesel filter
has an annular housing of plastics material which
provides a number of separate cells. A PTC resis-
tance heating element is provided in each cell and
the flow of diesel fuel through the heater is arranged
to pass in parallel through the cells so as to ensure
that all fuel comes into close contact with one of the
heating elements.

FIG. 1

EP 0 367 631 A1

# FUEL HEATERS

This invention relates to fuel heaters and in the most important example to diesel fuel heaters for use in or with fuel filters.

It is well known that solidification of waxy substances in diesel fuel can on cold starts cause clogging of filters. It has become established practice to install an electrical resistance heater within a filter assembly and the advantages of PTC resistance heating elements in this application have already been recognised. Reference is directed in this connection to US-A-4,406,785; US-A-4,479,477; USA-A,596,224; US-A-4,387,691; US-A-4,473,054; DE-A-3 320 903; GB-A-2 140 319 and EP-A-0 155 839.

Diesel fuel filter assemblies conventionally comprise a cylindrical filter cartridge mounted within a filter can which is screwed on to a hollow threaded stud within a filter head. Fuel enters the filter cartridge via an off-axis port in the filter head, passes radially inward through the filter cartridge and exits the filter assembly via the hollow threaded stud and a correspondingly positioned port in the filter head. It has previously been proposed to locate a fuel heater within the filter head and an annular configuration has been widely adopted. In many of these prior designs fuel enters an annular chamber within the heater device, passes in a circular arc over a number of PTC resistance heating discs mounted on a thermally conducting plate and exits through an aperture in the plate towards the filter cartridge.

This prior design is felt to have a number of serious drawbacks. In the diesel fuel flow around the annular chamber, only a fraction of the flow is brought into contact with the PTC discs. This leads to inefficient heating, although some reliance is placed upon indirect heating of the fuel via the thermally conducting mounting plate. The presence of the mounting plate and other metallic components within the heating device do, however, represent a thermal mass which must be heated before the working temperature of the heater is reached and also represents a thermal path through which heat is continually lost during operation.

It is an object of this invention to provide an improved fuel heater in which these difficulties are substantially overcome.

Accordingly, the present invention consists in a fuel heater comprising an electrically and thermally insulating housing having first and second generally opposed faces; a plurality of bores extending through said housing between said faces; a plurality of recesses defined in said second face, one each at the location of said bores; a plurality of PTC resistance heating elements disposed respectively in said recesses; electrical connection means for establishing current flow through said PTC elements and a cover plate adapted to engage said second face in a manner as substantially to close said recesses, the cover plate including a plurality of apertures located one each at the positions of the respective recesses such that there is provided a fuel passage extending between each said bore and the corresponding aperture, in close proximity with the PTC element disposed within the corresponding recess.

Advantageously, there is a flow channel defined in said first face to conduct fuel from a common inlet to each of said bores.

Preferably, said cover plate is formed of electrically and thermally insulating material.

Suitably, said electrical connection means includes a plurality of leaf springs each urging the corresponding PTC element into engagement with the housing.

It will be recognised that, in accordance with this invention, an arrangement is provided in which substantially all the fuel passing through the heater comes into close contact with one of the PTC elements. Since the fuel passes in parallel over the separate PTC elements, it is possible to provide, for the same overall fluid pressure drop, a more constricted flow path over each PTC element than would be the case with the prior art arrangement of a circulating fuel flow.

The present invention will now be described by way of example with reference to the accompanying drawings, in which:-

Figure 1 is a top plan view of a diesel fuel heater according to this invention;

Figure 2 is an underneath plan (partly cut away) view of the heater shown in Figure 1;

Figure 3 is a front view of the heater shown in Figure 1, partly in section;

Figure 4 is a section through the heater of Figure 1, shown as mounted within a diesel fuel filter assembly.

Figure 5 is a top plan view (partly cut away) of an alternative diesel fuel heater according to this invention.

Figure 6 is a partial underneath plan view (partly cut away) of the heater shown in Figure 5 and,

Figure 7 is a section on line 7-7 through the heater of Figure 5, shown as mounted within a diesel fuel filter assembly.

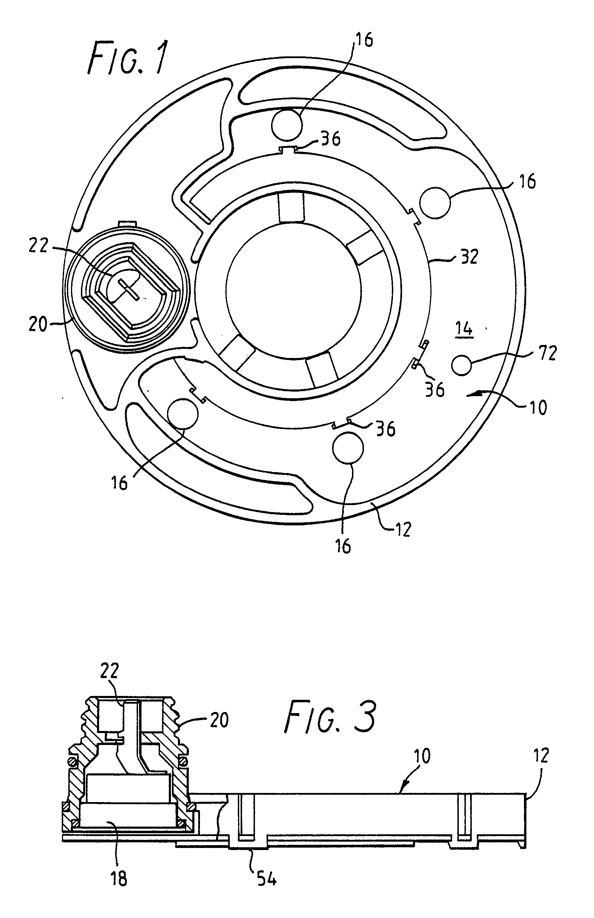

Referring to Figures 1 to 4 of the drawings, there is shown a heater body 10 which, in this example, is formed from glass filled nylon. The body 10 is of generally annular configuration and has on its upper face, as shown in Figure 1, an upstanding wall structure 12. This wall structure presents an essentially continuous outer cylindrical surface and defines a generally U-shaped internal flow chamber 14. Four apertures 16 extend through the heater body, with these apertures being located within the flow chamber 14. Outside the flow chamber 14 the heater body supports a thermostat 18 within a thermostat housing 20, the thermostat providing an electrical terminal 22 for external connection to the heater.

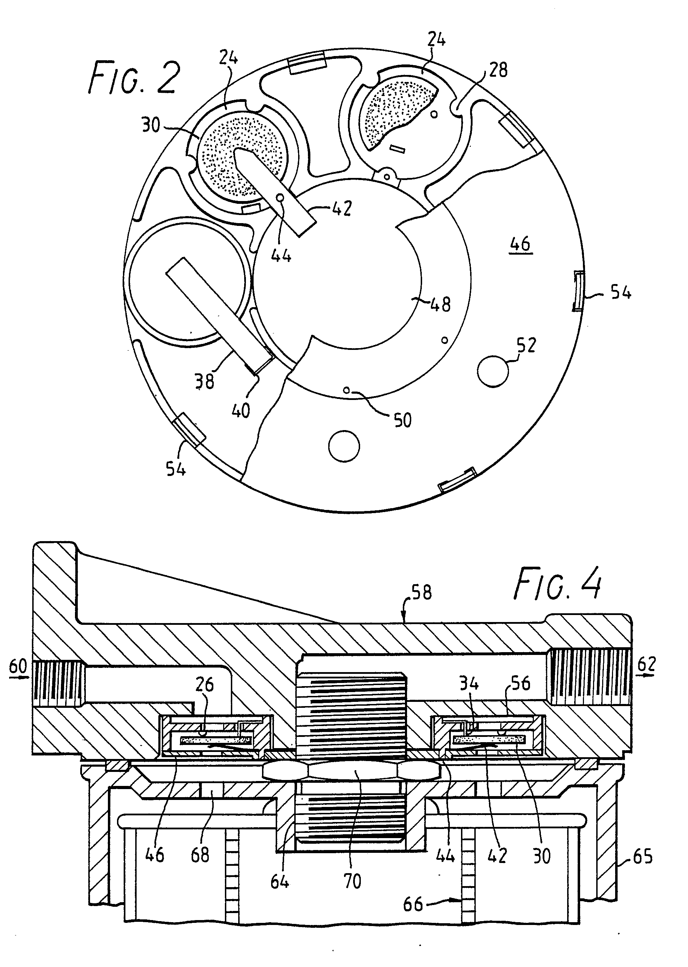

As seen most clearly in Figure 2, the underside of the heater body 10 is shaped to provide four circular recesses or cells 24 disposed at the location of the respective apertures 16. The floor of each cell 24 is provided with two locating dimples 26 (shown in Figure 3) and the inner periphery of the cell is formed with three equal angularly spaced lugs 28. A PTC resistance heating disc 30 is received within each cell 24 and is located in position by means of the locating dimples 26 and the lugs 28.

As shown in Figure 1, an electrical contact strip 32 of horseshoe-shape is positioned within the flow chamber 14. Five small tangs 34 extend from the contact strip through respective slits 36 in the heater body. Four of these tangs are aligned respectively with the apertures 16 and extend into the cells 24 to provide, with the dimples 26, a three point mounting for each of the PTC discs (as most clearly apparent from Figure 4). The fifth tang is crimped to hold the contact strip 32 in position relative to the heater body. At the location of the thermostat 18, the contact strip 32 is provided with an integral contact arm 38 which extends through a slot 40 in the heater body to establish electrical contact with the thermostat (as shown in Figure 2).

At the location of each cell 24, a radially extending leaf spring 42 is located on a respective pip 44 formed integrally with the heater body. Each leaf spring resiliently engages the underside of the corresponding PTC disc so as to urge that disc into contact with the three point mounting defined by the two dimples 26 and the tang 34. It will be recognised that the opposing faces of each PTC disc are metallised to provide ohmic contact with, on one side, the tang 34 and, on the other side, the leaf spring 42. The contact strip 32, including the tangs 34 and the leaf springs 42, may conveniently be formed of a berylium copper alloy.

The assembly of the heater body is completed by a disc shaped cover plate 46 of electrically and thermally insulating material, for example, glass filled nylon. The cover plate 46 has an axial orifice 48, a ring of small holes 50 positioned to cooperate respectively with the pips 44, and four apertures 52 aligned with the respective cells 24. A plurality of snap action fasteners 54 arranged around the outer periphery of the heater body serve to locate the top plate in position.

The manner of operation of the illustrated heater body can best be described with reference to Figure 4, which shows the heater body located within an annular recess 56 of a diesel filter head 58. As is conventional, the filter head provides a radial fuel inlet port 60 which communicates with the recess 56. A radial outlet port 62 communicates with the interior of an axial hollow stud 64. This stud is screwed threaded into the head 58 and provides a screw threaded mounting for a filter can, shown in feint outline at 65. This can 65 contains a filter cartridge 66. The surface of the filter can 65 which opposes the filter head 58 is dished and includes a number of drilled holes 68 serving as fuel entry points.

The described heater body is firmly held in position within the recess 56 by means of a nut 70 which is screwed onto the stud 64, trapping the cover plate 46 and establishing electrical connection between the inward ends of the leaf springs 42 and the stud 64.

At temperatures below the switch point of the thermostat, current supplied through terminal 22 passes via the horseshoe-shaped contact strip 32; to the PTC elements 30 in parallel, returning through the respective leaf springs, to the threaded stud and vehicle earth. As is well understood, the PTC elements will initially draw high current heating rapidly until the Curie point, at which the resistance increases through several orders of magnitude and the current accordingly drops.

Diesel fuel entering the port 60 is distributed by the flow chamber 14 to the apertures 16. As is shown in Figure 1, the radial dimension of the flow chamber 14 decreases in the directions away from the inlet port (the location of which is shown schematically at 72), so that approximately equal flow rates through the four apertures can be achieved. Fuel entering each cell 24, via the associated aperture 16, is constrained to pass in very close proximity to the PTC disc within that cell. Rapid and efficient heating of the fuel is thereby assured. Fuel passes out of each of the cells 24 via the aligned aperture 52 in the cover plate and passes to the filter cartridge 26. With flow through the four cells 24 being established in parallel, the fluid pressure drop across the heater body is maintained at an acceptable level, despite the constricted flow around each PTC element.

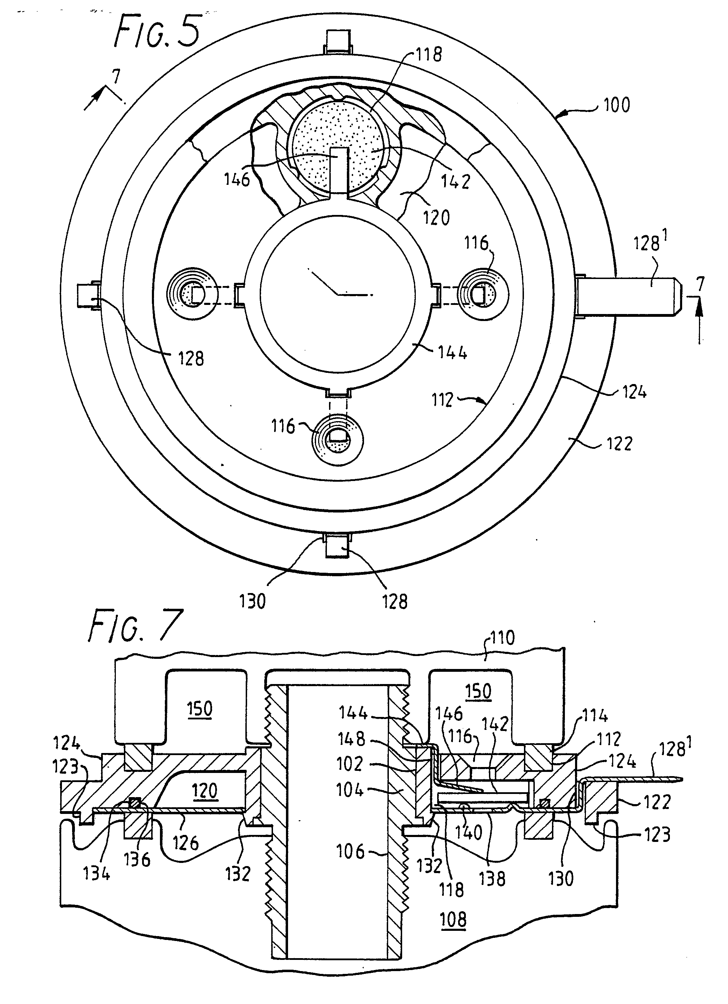

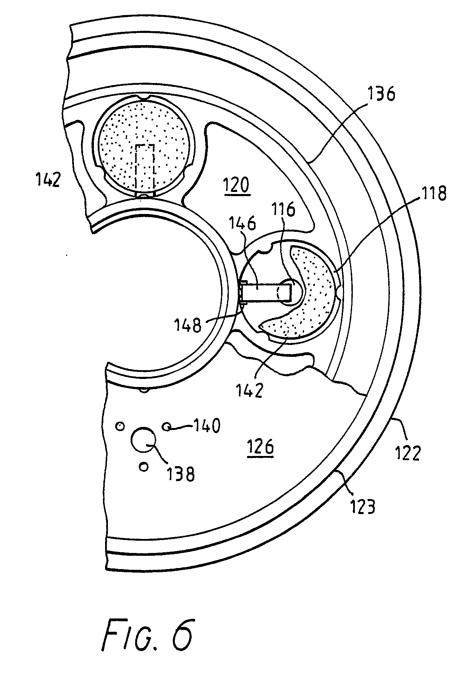

Referring now to Figures 5, 6 and 7, there is illustrated a further embodiment of this invention. The diesel fuel heater according to this embodient is intended to be mounted between an existing filter head and filter cartridge and does not require the filter head to have a recess specifically designed to receive the fuel heater.

The heater according to this embodiment comprises a housing 100 of annular form. The housing includes an integral collar 102 which, as shown in Figure 7, is a tight fit around a shoulder 104 provided on an adaptation of the conventional threaded stud 106 which serves to mount the filter cartridge (shown schematically at 108) upon the filter head (shown schematically at 110).

A recess 112 is cut in the upper surface of the housing 100 to receive a ring seal 114 which, in use of the described heater, effects a fluid tight seal between the heater and the filter head 110. In the region between the collar 102 and the recess 112, the housing is provided with four apertures 116, chamfered to the upper surface. Each of these apertures communicates with a cell or recess 118 formed in the underside of the housing. In the circumferential regions between the cells 118, voids 120 are provided to reduce weight and save material.

The outer region of the housing is formed as a ring 122 defined in the upper surface of the housing by shoulder 124. At the underside, the ring 122 provides a circular rim 123 which, with the collar 102, provides a location for an annular, metallic contact plate 126. Four equally spaced tangs 128 formed integrally with the contact plate 126 extend upwardly through respective slits 130 provided adjacent the shoulder 124 and are bent over the ring 122 to provide a mounting for the contact plate. One of these tangs 128' is of increased length and serves as a terminal for the heater. Mounting of the contact plate 126 is completed through a ridge 132 formed integrally with the collar 102, the contact plate being a snap-action fit over this ridge. An O-ring 134 received in a recess 136 in the underside of the housing ensures a fluid tight seal between the housing and the contact plate.

At the location of each cell 118, the contact plate 126 is formed with an aperture 138 and three locating dimples 140. A PTC pill 142 is provided in each cell 118 and rests on these locating dimples 114. A contact ring 144 overlies the upper surface of collar 102 and in use of the heater is trapped between that collar and the filter head 110 and is in electrical contact with the latter. Four leaf spring contacts 146 extend integrally from the contact ring, one each at the locations of the cells 118. Each leaf spring contact 146 passes through a slot 148 provided in the housing adjacent the collar 102 and extends at an angle across the associated cell to engage the upper surface of the pill 142. It will be recognised that these leaf spring contacts serve both to locate the pills axially and to establish electrical contact with the upper pill surface. Contact with the lower pill surface is established through the contact plate 126 and terminal 128'.

In operation, fuel passing through annular flow chamber 150 in the filter head 110 passes into each cell 118 through the associated chamfered aperture 116. That fuel is constrained pass in close proximity to the pill located in that cell, before passing through the associated aperture 138 to the filter cartridge 108.

It should be understood that this invention has been described by way of examples only and a variety of modifications can be made without departing from the scope of the invention. For example, whilst an anular configuration has been utilised in both described examples, it would be possible for the cells or recesses containing the individual PTC elements to be disposed in a linear array or other alternative configuration. The use in the first described embodiment of a cover plate formed of electrically and thermally insulating material is felt to have advantages, particularly in reducing the thermal mass of the heater. However, a metallic cover plate could be used as described in the second embodiment. The use in both embodiments of a leaf spring contact which serves additionally to locate the PTC element has advantages but a non-resilient contact could also be employed with an additional spring element or series of spring elements serving to locate the PTC elements and, if necessary, additionally serving to maintain contact between the non-resilient contact and the appropriate surface of the PTC element.

## Claims

1. A fuel heater comprising an electrically and thermally insulating housing (10) having first and second generally opposed faces; a plurality of bores (16) extending through said housing between said faces; a plurality of recesses (24) defined in said second face, one each at the location of said bores (16); a plurality of PTC resistance heating elements (30) disposed respectively in said recesses; electrical connection means (32, 42) for establishing current flow through said PTC elements and a cover plate (46) adapted to engage said second face in a manner as substantially to close said recesses, the cover plate including a plurality of apertures (52) located one each at the positions of the respective recesses such that there is provided a fuel passage extending between each said bore and the corresponding aperture, in close proximity with the PTC element (30) disposed within the corresponding recess.

2. A fuel heater as claimed in Claim 1, wherein a flow channel (14) is defined in said first face to conduct fuel from a common inlet (72) to each of said bores.

3. A fuel heater as claimed in Claim 2, wherein the transverse dimension of said flow channel (14) reduces in a direction or directions away from said common inlet (72) so as to promote equal flow through said bores.

4. A fuel heater as claimed in any one of the preceding claims, wherein said cover plate (46) is formed of electrically and thermally insulating material.

5. A fuel heater according to any one of the preceding claims, wherein said housing (10) is generally annular with said recesses (24) distributed circumferentially.

6. A fuel heater as claimed in any one of the preceding claims, wherein said electrical connection means includes a plurality of leaf springs (42) each urging a corresponding PTC element into engagement with the housing.

7. A fuel heater as claimed in Claim 6 as dependent on Claim 5, wherein each said leaf spring has a portion extending toward the centre of the annular housing for electrical connection with a metal stud (64) passing centrally through said housing.

8. A fuel heater as claimed in any one of the preceding claims, wherein said electrical connection means includes a contact strip (32) disposed on said first face and having a plurality of integral contact lugs (34) projecting through respective slots (36) in said housing for electrical connection with respective PTC elements.

9. A fuel heater as claimed in Claim 8 and further comprising a thermostat (18) mounted in said housing, the thermostat having first and second contacts, the first contact serving as a terminal for the fuel heater; and wherein said contact strip further comprises an integral tang (34) establishing electrical connection with said second contact.

10. A diesel filter comprising a filter element assembly (65) and a filter head (58), the filter head being provided with an annular recess (56) and having mounted in said recess a fuel heater according to any one of the preceding claims.

*FIG.1*

16
16
36
22
32
20
14
72
36
10
36
16
36
16
12
16

22

*FIG. 3*

20
10
12

18
54

*FIG. 2*

24
24
28
30
42
44
46
48
54
52
50
38
40
54

58
*FIG. 4*

60
62
26
34
56
46
68
64
70
44
42
30
65
66

*FIG. 5*

*FIG. 7*

FIG. 6

# EUROPEAN SEARCH REPORT

Application Number

EP    89 31 1452

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,A | US-A-4387691 (MARCOUX)<br>* column 4, lines 23 – 39; figures 1, 2 *<br>* column 4, lines 50 – 68 *<br>* column 5, lines 1 – 41 *<br>--- | 1, 4, 10 | F02M31/12<br>F23K5/20<br>F02M37/22 |
| D,A | DE-A-3320903 (BMW)<br>* page 5, lines 19 – 38; figure 2 *<br>* page 6, lines 1 – 15 *<br>--- | 1 | |
| D,A | GB-A-2140319 (FORD)<br>* page 3, lines 49 – 115; figures 2-5 *<br>--- | 1, 5, 6, 10 | |
| D,A | US-A-4406785 (SIEFER)<br>* column 3, lines 8 – 54; figures 1-4 *<br>* column 4, lines 7 – 23 *<br>--- | 1, 10 | |
| D,A | EP-A-155839 (VAN DER LELY)<br>* page 5, lines 15 – 24 *<br>* page 6, lines 1 – 28 *<br>* page 7, lines 1 – 27 *<br>* page 9, lines 5 – 16 *<br>* page 10, lines 3 – 26 *<br>----- | 1, 10 | |
| | | | TECHNICAL FIELDS SEARCHED (Int. Cl.5 )<br><br>F02M<br>F23K<br>H05B |

The present search report has been drawn up for all claims

| Place of search | Date of completion of the search | Examiner |
|---|---|---|
| THE HAGUE | 01 FEBRUARY 1990 | JORIS J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document